# EUROPÄISCHE PATENTANMELDUNG

(11) **EP 4 741 666 A1**
(43) Veröffentlichungstag der Anmeldung: **13.05.2026**
(21) Anmeldenummer: 26165403.2
(22) Anmeldetag: 17.03.2026
(51) Int. Cl.: F04D 19/04, F04D 25/06, H02K 1/272, H02K 7/14, F04D 29/053

(54) **VAKUUMPUMPE UMFASSEND INNERHALB EINER WELLE ANGEORDNETE PERMANENTMAGNETE EINES SYNCHRONMOTORS**

(71) Anmelder: Pfeiffer Vacuum Technology AG, 35614 Asslar (DE)
(72) Erfinder: Die Erfindernennung liegt noch nicht vor
(74) Vertreter: Manitz Finsterwald Patent- und Rechtsanwaltspartnerschaft mbB

(57) **Zusammenfassung**

Die Erfindung betrifft eine Vakuumpumpe, insbesondere Turbomolekularpumpe, mit einem Pumpsystem, das einen Stator und einen im Betrieb relativ zum Stator um eine Drehachse rotierenden Rotor umfasst, und mit einem Elektromotor als Drehantrieb für den Rotor, wobei der Elektromotor ein permanenterregter Synchronmotor ist, der Rotor eine Welle umfasst, und die Permanentmagnete des Synchronmotors innerhalb der Welle angeordnet sind.

## Beschreibung

Die Erfindung betrifft eine Vakuumpumpe, insbesondere Turbomolekularpumpe, mit einem Pumpsystem, das einen Stator und einen im Betrieb relativ zum Stator um eine Drehachse rotierenden Rotor umfasst, und mit einem Elektromotor als Drehantrieb für den Rotor, wobei der Elektromotor ein permanenterregter Synchronmotor ist.

Vakuumpumpen mit einem permanenterregten Synchronmotor als Drehantrieb für den während des Betriebs schnelldrehenden Rotor sind grundsätzlich bekannt. Ein derartiger Drehantrieb kommt insbesondere, aber nicht ausschließlich, bei Turbomolekularpumpen zum Einsatz. Bei Turbomolekularpumpen handelt es sich um hinsichtlich Aufbau und Funktionsweise grundsätzlich bekannte Vakuumpumpen, die vielseitig einsetzbar sind und in unterschiedlichen Anwendungen und Umgebungen in Industrie und Wissenschaft Verwendung finden.

Der Rotor einer Vakuumpumpe kann einteilig oder mehrteilig aufgebaut sein. Bei einer Turbomolekularpumpe umfasst der Rotor unter anderem pumpaktive Rotorelemente, die mit pumpaktiven Statorelementen während des Pumpbetriebs pumpwirksam zusammenwirken. Die pumpwirksamen Rotorelemente und die pumpwirksamen Statorelemente sind Bestandteile des Pumpsystems der Turbomolekularpumpe. Bei den pumpaktiven Rotorelementen des Rotors handelt es sich insbesondere um eine Mehrzahl von jeweils mehrere Rotorschaufeln umfassenden Rotorscheiben, die mit mehreren jeweils mehrere Statorschaufeln umfassenden Statorscheiben zusammenwirken.

Wenn das Pumpsystem der Turbomolekularpumpe zusätzlich zu einer oder mehreren derartigen Turbomolekularpumpstufen eine oder mehrere Holweckpumpstufen aufweist, dann umfasst der Rotor außerdem eine oder mehrere Holweckhülsen, die mit einem oder mehreren Holweckstatoren des Stators pumpwirksam zusammenwirken.

In vielen Fällen bildet ein auch als Welle oder Rotorwelle bezeichneter Bestandteil des Rotors gleichzeitig den auch als Läufer bezeichneten Motorrotor des Elektromotors. Wenn der Elektromotor ein permanenterregter Synchronmotor ist, dann sind dessen Permanentmagnete am Motorrotor angebracht, d.h. die Welle des Rotors trägt die Permanentmagnete des permanentmagneterregten Synchronmotors. Der auch als Ständer bezeichnete Motorstator des Synchronmotors umfasst dann unter anderem das Statorblechpaket mit den Wicklungen, wobei in manchen Ausführungen der Stator mehrere auch als Zähne bezeichnete Segmente und somit mehrere Blechpakete umfassen kann.

In der Praxis werden bislang die Permanentmagnete auf der Außenseite des Motorrotors angebracht. Aufgrund der hohen Drehzahlen des Rotors während des Betriebs und der dadurch auftretenden Zentrifugalkräfte werden die Permanentmagnete in der Praxis mit einer äußeren Bandage, z.B. in Form einer Hülse, versehen, die dafür sorgt, dass die Magnete während des Betriebs auf ihrer radialen Sollposition verbleiben. Derartige Bandagen bzw. Hülsen bestehen typischerweise aus Kohlefaserverbundwerkstoffen. Zusätzlich wird in der Praxis meist ein auch als "back iron" bezeichnetes Rückschlussbauteil, z.B. ein Rückschlussrring, eingesetzt, um den Verlauf des magnetischen Flusses der Permanentmagnete zu verbessern.

Es wurde nun erkannt, dass ein derartiger Rotoraufbau aufgrund der hierbei verwendeten unterschiedlichen Materialien und der hieraus resultierenden unterschiedlichen mechanischen Eigenschaften gerade bei Vakuumanwendungen von Nachteil ist. Zum einen ist ein derartiger Rotoraufbau mit Bandage und Rückschlussring vergleichsweise komplex. Zudem hat die Bandage insbesondere dann, wenn sie auf einem Kohlefaserverbundwerkstoff basiert, eine thermische Isolation der Magneten zur Folge. Wärme, die während des Betriebs aufgrund von Wirbelstrom- und Hystereseverlusten in den Magneten entsteht, kann daher schlecht oder überhaupt nicht abgeführt werden. Dies kann zu einer nachteiligen Überhitzung des Rotors führen.

Aufgabe der Erfindung ist es, diese Nachteile zu beseitigen.

Die Lösung dieser Aufgabe erfolgt durch die Merkmale des unabhängigen Anspruchs 1. Dementsprechend ist vorgesehen, dass der Rotor eine Welle umfasst und die Permanentmagnete des Synchronmotors innerhalb der Welle angeordnet sind.

Die Anordnung der Permanentmagnete innerhalb der Rotorwelle bedeutet eine Abkehr von dem bislang verfolgten Konzept, die Permanentmagnete an der Außenseite der Welle anzubringen. Es wurde überraschend gefunden, dass die Anordnung der Permanentmagnete innerhalb der Welle in mehrfacher Hinsicht von Vorteil ist.

Zum einen kann hierdurch auf eine äußere Bandage verzichtet werden, da die Welle mechanisch ausreichend stabil ist, um trotz der auftretenden Zentrifugalkräfte die Permanentmagnete an ihren radialen Sollposition innerhalb der Welle zu halten.

Zum anderen ist kein Rückschlussring mehr erforderlich. Der magnetische Fluss kann einfach durch die Wahl größerer Permanentmagnete, also - bezogen auf die radiale Richtung - dickere Magnete verbessert werden, was bei der bislang üblichen Anbringung der Magnete auf der Außenseite der Welle eben aufgrund der im Betrieb auftretenden Zentrifugalkräfte problematisch wäre. Alternativ oder zusätzlich können Magnete mit einer entsprechend gewählten Remanenzflussdichte verwendet werden, um den fehlenden Rückschlussring zu kompensieren.

Das Verlegen der Permanentmagnete in das Innere der Welle hat darüber hinaus den weiteren Vorteil, dass die Anordnung der Magnete derart erfolgen kann, dass ein guter Wärmeübertrag von den Magneten an das Material der Welle erfolgen kann. Überhitzungssituationen werden hierdurch vermieden.

Ferner hat sich herausgestellt, dass das die Permanentmagnete radial außen umgebende Material der Welle als Abschirmung gegen Wirbelstromverluste in den Permanentmagneten wirksam sein kann, womit von vornherein einer Erwärmung der Permanentmagnete entgegengewirkt wird.

Das erfindungsgemäße Konzept ermöglicht es des Weiteren, aus speziellen Materialien hergestellte Permanentmagnete zu verwenden. Insbesondere kunststoffgebundene Permanentmagnete oder gesinterte Permanentmagnete können zum Einsatz kommen. Gerade kunststoffgebundenen Permanentmagneten sind Wirbelstromverluste inhärent.

Vor allem in konstruktiver Hinsicht ermöglicht das erfindungsgemäße Konzept zudem niedrigere Herstellungskosten und resultiert zudem in einer höheren Robustheit des von der Welle und den Permanentmagneten gebildeten Motorrotors, da die äußere Bandage und der Rückschlussring entfallen können.

Ein nicht vorhandener Rückschlussring ist bei dem erfindungsgemäßen Konzept allerdings nicht zwingend. Ein Rückschlussbauteil, das in einigen Ausführungsbeispielen der Erfindung vorgesehen und dabei grundsätzlich beliebig ausgebildet sein kann, kann in bestimmten Situationen vorteilhaft sein. Die Induktivität der Wicklungen kann hierdurch erhöht werden. Ferner braucht hierdurch weniger Magnetmaterial eingesetzt zu werden.

Darüber hinaus ist es möglich, die in der Welle angeordneten Permanentmagnete gegenüber der Umgebung abzudichten, d.h. die Welle kann an der betreffenden Stelle insbesondere vakuumdicht verschlossen werden. Eine derartige Kapselung der Permanentmagnete in der Welle ist besonders bei sogenannten korrosiven Anwendungen von Vorteil, denn die Permanentmagnete können durch diese Kapselung auf einfache Weise gegenüber korrosiv wirkenden Gasen geschützt werden.

Des Weiteren hat sich herausgestellt, dass unter bestimmten Bedingungen der Synchronmotor wie ein Asynchronmotor gestartet werden kann, da das Material der Welle, das die Permanentmagnete radial außen umgibt, wie ein Asynchronläufer wirken kann.

Vorteilhafte Weiterbildungen des Gegenstands des unabhängigen Anspruchs 1 sind auch in der nachfolgenden Beschreibung und in den Figuren angegeben.

Gemäß einigen Ausführungsformen kann vorgesehen sein, dass in der Welle zumindest ein Aufnahmeraum ausgebildet ist, in dem die Permanentmagnete angeordnet sind.

Der Aufnahmeraum kann durch Bearbeitung eines Rohteils der Welle entstanden sein, insbesondere durch Trennen, insbesondere durch Spanen.

Der Aufnahmeraum kann zwischen einem radial äußeren, zur Drehachse konzentrischen Hülsenabschnitt der Welle und einem radial inneren, die Drehachse als Mittelachse aufweisenden Zentralabschnitt der Welle gelegen sein. Der Zentralabschnitt kann z.B. als Vollzylinderabschnitt ausgebildet sein. Der radial äußere Hülsenabschnitt bildet ein mechanisches Widerlager für die Permanentmagnete, die während des Betriebs aufgrund der Zentrifugalkräfte nach radial außen streben.

Außerdem kann der Hülsenabschnitt als Abschirmung gegen Wirbelstromverluste in den Permanentmagneten wirksam sein.

Der Aufnahmeraum kann ringförmig oder teilringförmig sein und sich auf einem Kreis um die Drehachse herum erstrecken.

Der Aufnahmeraum kann von einem einzigen Raum gebildet sein. Alternativ kann der Aufnahmeraum eine Mehrzahl von separaten Einzelräumen umfassen, die auf einem Kreis um die Drehachse liegen. Jeder Einzelraum kann einen oder mehrere Permanentmagnete aufnehmen. Die Einzelräume können nach Art von Taschen in der Welle ausgebildet sein. Ferner kann vorgesehen sein, dass die Einzelräume durch von dem Material der Welle gebildete Trennwände in Umfangsrichtung voneinander getrennt sind, wobei die Trennwände einstückig mit dem Rest der Welle ausgebildet sind. Die Einzelräume trennende Wände können alternativ separate Elemente sein, die aus dem gleichen Material wie die Welle oder aus einem anderen Material bestehen können.

Der Aufnahmeraum kann von einer Nut gebildet sein, die in einer, insbesondere ebenen, Stirnseite der Welle oder in einer um einen vorstehenden Zentralabschnitt, insbesondere Vollzylinderabschnitt, der Welle umlaufenden Ringfläche der Welle ausgebildet ist.

Die Permanentmagnete können in den Aufnahmeraum eingepresst sein. Hierdurch kann ein vergleichsweiser großflächiger Kontakt zwischen den Außenseiten der Permanentmagnete und dem Material der Welle erreicht werden, was eine gute Wärmeübertragung von den Permanentmagneten an die Welle ermöglicht.

Der Aufnahmeraum kann insbesondere vakuumdicht verschlossen sein. Durch eine derartige Kapselung der Permanentmagnete in der Welle können die Permanentmagnete vor äußeren Einflüssen und insbesondere korrosiven Gasen geschützt werden.

Der Aufnahmeraum kann von einer Außenwandung der Welle umgeben sein. Eine derartige Außenwandung kann von einem zur Drehachse konzentrischen Hülsenabschnitt der Welle gebildet sein, wie er vorstehend bereits erwähnt worden ist.

Die Permanentmagnete können derart in der Welle angeordnet sein, dass sie in unmittelbarem mechanischen Kontakt mit dem Material der Welle stehen. Insbesondere kann dabei vorgesehen sein, dass die Permanentmagnete mit der Innenfläche einer den Aufnahmeraum nach radial außen begrenzenden Außenwandung in unmittelbarem mechanischem Kontakt stehen. Dies stellt eine in sowohl mechanischer als auch thermischer Hinsicht vorteilhafte Anordnung der Permanentmagnete in der Welle dar. Ein solcher Kontakt kann beispielsweise durch Einpressen der Permanentmagnete erzielt werden.

Des Weiteren kann vorgesehen sein, dass sich in dem Aufnahmeraum zusätzlich zu den Permanentmagneten ein Material befindet, das eine gute Wärmeleitfähigkeit besitzt und so das Übertragen von Wärme von den Permanentmagneten an die Welle verbessert. Bei dem Material kann es sich beispielsweise um ein Fasermaterial insbesondere aus Metall oder um ein Gel oder eine Paste handeln. In Abhängigkeit von den jeweiligen geometrischen Gegebenheiten kann das Material gegebenenfalls verbleibende Leerräume zwischen den Permanentmagen und den Innenwänden des Aufnahmeraumes ausfüllen.

Der Welle kann aus einem Material bestehen, dass Aluminium ist oder das Aluminium umfasst.

Bei den Permanentmagneten kann es sich um gesinterte Permanentmagnete oder um kunststoffgebundene Permanentmagnete handeln.

Gemäß einigen Weiterbildungen kann vorgesehen sein, dass die Permanentmagnete zusammen einen Permanentmagnet-Ring bilden, der um die Drehachse herum verläuft.

Wie vorstehend bereits erwähnt, ist ein Vorteil des erfindungsgemäßen Konzeptes, dass auf ein Rückschlussbauteil ("back iron") verzichtet werden kann, wenn die jeweiligen Gegebenheiten dies zulassen. Dementsprechend zeichnen sich einige Ausführungsbeispiele der Erfindung dadurch aus, dass kein Rückschlussbauteil für die Permanentmagnete vorgesehen ist. In anderen Ausführungsbeispielen dagegen kann für die Permanentmagnete ein Rückschlussbauteil, z.B. ein Rückschlussring, vorhanden sein.

Die Erfindung wird im Folgenden beispielhaft unter Bezugnahme auf die Zeichnung beschrieben. Es zeigen:
- Fig. 1: eine perspektivische Ansicht einer Turbomolekularpumpe,
- Fig. 2: eine Ansicht der Unterseite der Turbomolekularpumpe von Fig. 1,
- Fig. 3: einen Querschnitt der Turbomolekularpumpe längs der in Fig. 2 gezeigten Schnittlinie A-A,
- Fig. 4: eine Querschnittsansicht der Turbomolekularpumpe längs der in Fig. 2 gezeigten Schnittlinie B-B,
- Fig. 5: eine Querschnittsansicht der Turbomolekularpumpe längs der in Fig. 2 gezeigten Schnittlinie C-C,
- Fig. 6: schematisch in einem Schnitt senkrecht zur Drehachse eine herkömmliche Anordnung von Permanentmagneten gemäß dem Stand der Technik,
- Fig. 7: eine Ansicht entsprechend Fig. 6 mit einer Anordnung der Permanentmagnete gemäß einem möglichen Ausführungsbeispiel der Erfindung, und
- Fig. 8: schematisch die Anordnung der Permanentmagnete gemäß Fig. 7 in einem die Drehachse enthaltenden Längsschnitt.

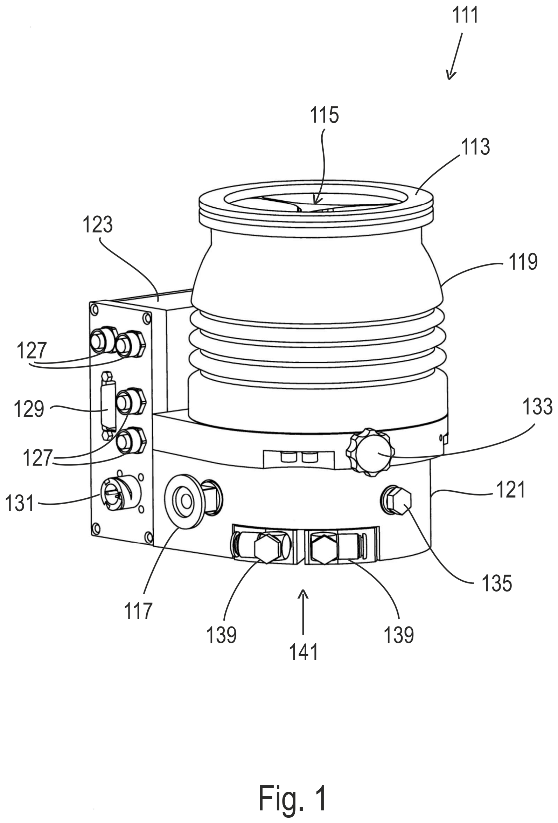

Die in Fig. 1 gezeigte Turbomolekularpumpe 111 umfasst einen von einem Einlassflansch 113 umgebenen Pumpeneinlass 115, an welchen in an sich bekannter Weise ein nicht dargestellter Rezipient angeschlossen werden kann. Das Gas aus dem Rezipienten kann über den Pumpeneinlass 115 aus dem Rezipienten gesaugt und durch die Pumpe hindurch zu einem Pumpenauslass 117 gefördert werden, an den eine Vorvakuumpumpe, wie etwa eine Drehschieberpumpe, angeschlossen sein kann.

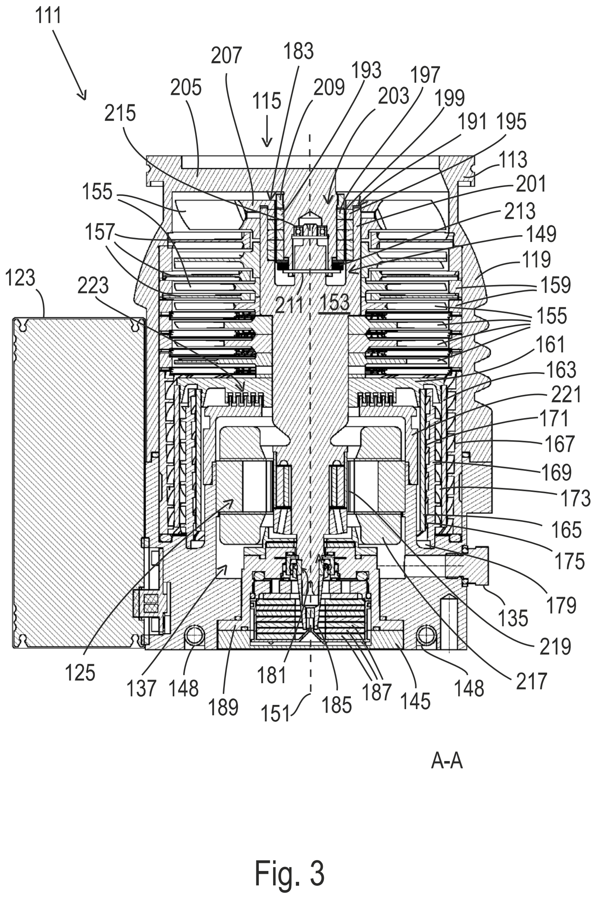

Der Einlassflansch 113 bildet bei der Ausrichtung der Vakuumpumpe gemäß Fig. 1 das obere Ende des Gehäuses 119 der Vakuumpumpe 111. Das Gehäuse 119 umfasst ein Unterteil 121, an welchem seitlich ein Elektronikgehäuse 123 angeordnet ist. In dem Elektronikgehäuse 123 sind elektrische und/oder elektronische Komponenten der Vakuumpumpe 111 untergebracht, z.B. zum Betreiben eines in der Vakuumpumpe angeordneten Elektromotors 125 (vgl. auch Fig. 3). Am Elektronikgehäuse 123 sind mehrere Anschlüsse 127 für Zubehör vorgesehen. Außerdem sind eine Datenschnittstelle 129, z.B. gemäß dem RS485-Standard, und ein Stromversorgungsanschluss 131 am Elektronikgehäuse 123 angeordnet.

Es existieren auch Turbomolekularpumpen, die kein derartiges angebrachtes Elektronikgehäuse aufweisen, sondern an eine externe Antriebselektronik angeschlossen werden.

Am Gehäuse 119 der Turbomolekularpumpe 111 ist ein Fluteinlass 133, insbesondere in Form eines Flutventils, vorgesehen, über den die Vakuumpumpe 111 geflutet werden kann. Im Bereich des Unterteils 121 ist ferner noch ein Sperrgasanschluss 135, der auch als Spülgasanschluss bezeichnet wird, angeordnet, über welchen Spülgas zum Schutz des Elektromotors 125 (siehe z.B. Fig. 3) vor dem von der Pumpe geförderten Gas in den Motorraum 137, in welchem der Elektromotor 125 in der Vakuumpumpe 111 untergebracht ist, eingelassen werden kann. Im Unterteil 121 sind ferner noch zwei Kühlmittelanschlüsse 139 angeordnet, wobei einer der Kühlmittelanschlüsse als Einlass und der andere Kühlmittelanschluss als Auslass für Kühlmittel vorgesehen ist, das zu Kühlzwecken in die Vakuumpumpe geleitet werden kann. Andere existierende Turbomolekularvakuumpumpen (nicht dargestellt) werden ausschließlich mit Luftkühlung betrieben.

Die untere Seite 141 der Vakuumpumpe kann als Standfläche dienen, sodass die Vakuumpumpe 111 auf der Unterseite 141 stehend betrieben werden kann. Die Vakuumpumpe 111 kann aber auch über den Einlassflansch 113 an einem Rezipienten befestigt werden und somit gewissermaßen hängend betrieben werden. Außerdem kann die Vakuumpumpe 111 so gestaltet sein, dass sie auch in Betrieb genommen werden kann, wenn sie auf andere Weise ausgerichtet ist als in Fig. 1 gezeigt ist. Es lassen sich auch Ausführungsformen der Vakuumpumpe realisieren, bei der die Unterseite 141 nicht nach unten, sondern zur Seite gewandt oder nach oben gerichtet angeordnet werden kann. Grundsätzlich sind dabei beliebige Winkel möglich.

Andere existierende Turbomolekularvakuumpumpen (nicht dargestellt), die insbesondere größer sind als die hier dargestellte Pumpe, können nicht stehend betrieben werden.

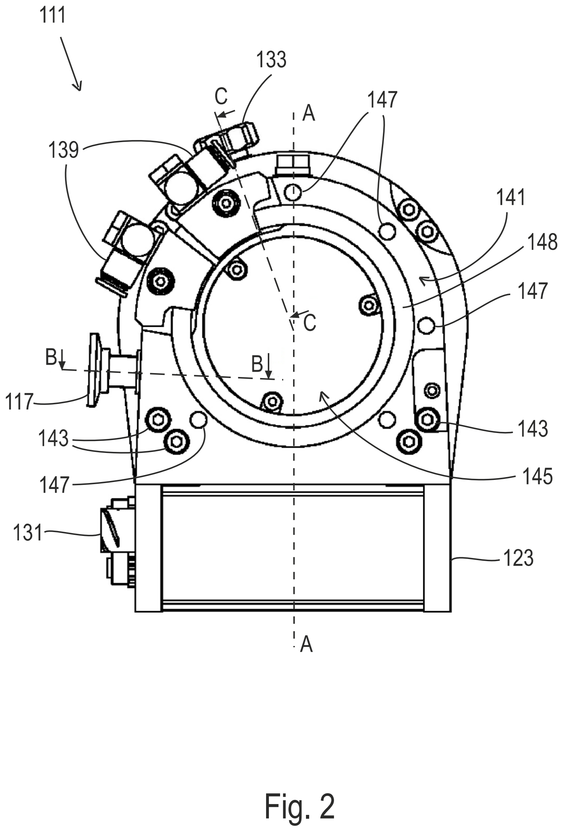

An der Unterseite 141, die in Fig. 2 dargestellt ist, sind noch diverse Schrauben 143 angeordnet, mittels denen hier nicht weiter spezifizierte Bauteile der Vakuumpumpe aneinander befestigt sind. Beispielsweise ist ein Lagerdeckel 145 an der Unterseite 141 befestigt.

An der Unterseite 141 sind außerdem Befestigungsbohrungen 147 angeordnet, über welche die Pumpe 111 beispielsweise an einer Auflagefläche befestigt werden kann. Dies ist bei anderen existierenden Turbomolekularvakuumpumpen (nicht dargestellt), die insbesondere größer sind als die hier dargestellte Pumpe, nicht möglich.

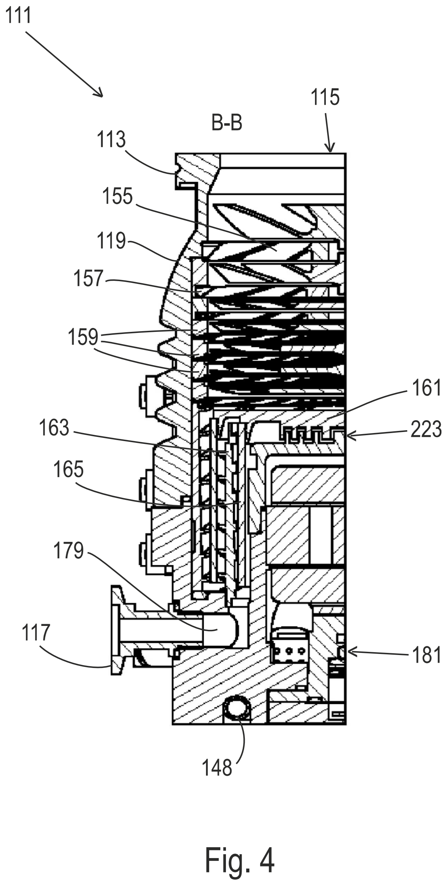

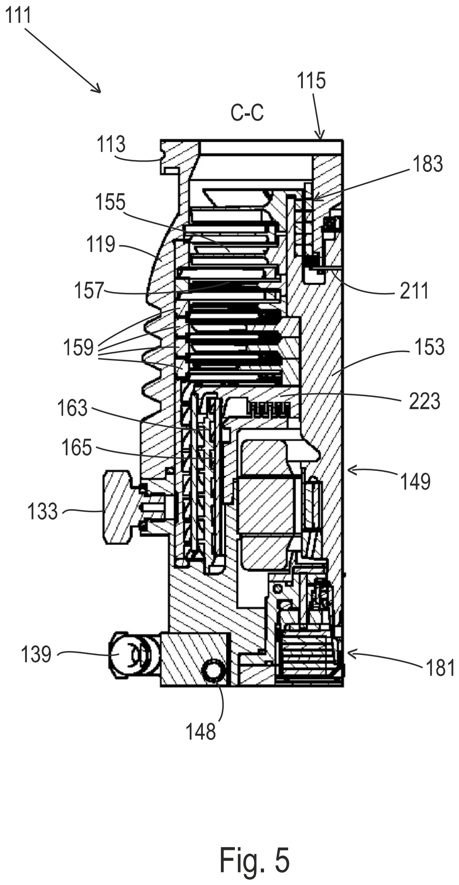

In den Figuren 2 bis 5 ist eine Kühlmittelleitung 148 dargestellt, in welcher das über die Kühlmittelanschlüsse 139 ein- und ausgeleitete Kühlmittel zirkulieren kann.

Wie die Schnittdarstellungen der Figuren 3 bis 5 zeigen, umfasst die Vakuumpumpe mehrere Prozessgaspumpstufen zur Förderung des an dem Pumpeneinlass 115 anstehenden Prozessgases zu dem Pumpenauslass 117.

In dem Gehäuse 119 ist ein Rotor 149 angeordnet, der eine um eine Rotationsachse 151 drehbare Rotorwelle 153 aufweist.

Die Turbomolekularpumpe 111 umfasst mehrere pumpwirksam miteinander in Serie geschaltete turbomolekulare Pumpstufen mit mehreren an der Rotorwelle 153 befestigten radialen Rotorscheiben 155 und zwischen den Rotorscheiben 155 angeordneten und in dem Gehäuse 119 festgelegten Statorscheiben 157. Dabei bilden eine Rotorscheibe 155 und eine benachbarte Statorscheibe 157 jeweils eine turbomolekulare Pumpstufe. Die Statorscheiben 157 sind durch Abstandsringe 159 in einem gewünschten axialen Abstand zueinander gehalten.

Die Vakuumpumpe umfasst außerdem in radialer Richtung ineinander angeordnete und pumpwirksam miteinander in Serie geschaltete Holweck-Pumpstufen. Es existieren andere Turbomolekularvakuumpumpen (nicht dargestellt), die keine Holweck-Pumpstufen aufweisen.

Der Rotor der Holweck-Pumpstufen umfasst eine an der Rotorwelle 153 angeordnete Rotornabe 161 und zwei an der Rotornabe 161 befestigte und von dieser getragene zylindermantelförmige Holweck-Rotorhülsen 163, 165, die koaxial zur Rotationsachse 151 orientiert und in radialer Richtung ineinander geschachtelt sind. Ferner sind zwei zylindermantelförmige Holweck-Statorhülsen 167, 169 vorgesehen, die ebenfalls koaxial zu der Rotationsachse 151 orientiert und in radialer Richtung gesehen ineinander geschachtelt sind.

Die pumpaktiven Oberflächen der Holweck-Pumpstufen sind durch die Mantelflächen, also durch die radialen Innen- und/oder Außenflächen, der Holweck-Rotorhülsen 163, 165 und der Holweck-Statorhülsen 167, 169 gebildet. Die radiale Innenfläche der äußeren Holweck-Statorhülse 167 liegt der radialen Außenfläche der äußeren Holweck-Rotorhülse 163 unter Ausbildung eines radialen Holweck-Spalts 171 gegenüber und bildet mit dieser die der Turbomolekularpumpen nachfolgende erste Holweck-Pumpstufe. Die radiale Innenfläche der äußeren Holweck-Rotorhülse 163 steht der radialen Außenfläche der inneren Holweck-Statorhülse 169 unter Ausbildung eines radialen Holweck-Spalts 173 gegenüber und bildet mit dieser eine zweite Holweck-Pumpstufe. Die radiale Innenfläche der inneren Holweck-Statorhülse 169 liegt der radialen Außenfläche der inneren Holweck-Rotorhülse 165 unter Ausbildung eines radialen Holweck-Spalts 175 gegenüber und bildet mit dieser die dritte Holweck-Pumpstufe.

Am unteren Ende der Holweck-Rotorhülse 163 kann ein radial verlaufender Kanal vorgesehen sein, über den der radial außenliegende Holweck-Spalt 171 mit dem mittleren Holweck-Spalt 173 verbunden ist. Außerdem kann am oberen Ende der inneren Holweck-Statorhülse 169 ein radial verlaufender Kanal vorgesehen sein, über den der mittlere Holweck-Spalt 173 mit dem radial innenliegenden Holweck-Spalt 175 verbunden ist. Dadurch werden die ineinander geschachtelten Holweck-Pumpstufen in Serie miteinander geschaltet. Am unteren Ende der radial innenliegenden Holweck-Rotorhülse 165 kann ferner ein Verbindungskanal 179 zum Auslass 117 vorgesehen sein.

Die vorstehend genannten pumpaktiven Oberflächen der Holweck-Statorhülsen 167, 169 weisen jeweils mehrere spiralförmig um die Rotationsachse 151 herum in axialer Richtung verlaufende Holweck-Nuten auf, während die gegenüberliegenden Mantelflächen der Holweck-Rotorhülsen 163, 165 glatt ausgebildet sind und das Gas zum Betrieb der Vakuumpumpe 111 in den Holweck-Nuten vorantreiben.

Zur drehbaren Lagerung der Rotorwelle 153 sind ein Wälzlager 181 im Bereich des Pumpenauslasses 117 und ein Permanentmagnetlager 183 im Bereich des Pumpeneinlasses 115 vorgesehen.

Im Bereich des Wälzlagers 181 ist an der Rotorwelle 153 eine konische Spritzmutter 185 mit einem zu dem Wälzlager 181 hin zunehmenden Außendurchmesser vorgesehen. Die Spritzmutter 185 steht mit mindestens einem Abstreifer eines Betriebsmittelspeichers in gleitendem Kontakt. Bei anderen existierenden Turbomolekularvakuumpumpen (nicht dargestellt) kann anstelle einer Spritzmutter eine Spritzschraube vorgesehen sein. Da somit unterschiedliche Ausführungen möglich sind, wird in diesem Zusammenhang auch der Begriff "Spritzspitze" verwendet.

Der Betriebsmittelspeicher umfasst mehrere aufeinander gestapelte saugfähige Scheiben 187, die mit einem Betriebsmittel für das Wälzlager 181, z.B. mit einem Schmiermittel, getränkt sind.

Im Betrieb der Vakuumpumpe 111 wird das Betriebsmittel durch kapillare Wirkung von dem Betriebsmittelspeicher über den Abstreifer auf die rotierende Spritzmutter 185 übertragen und in Folge der Zentrifugalkraft entlang der Spritzmutter 185 in Richtung des größer werdenden Außendurchmessers der Spritzmutter 185 zu dem Wälzlager 181 hin gefördert, wo es z.B. eine schmierende Funktion erfüllt. Das Wälzlager 181 und der Betriebsmittelspeicher sind durch einen wannenförmigen Einsatz 189 und den Lagerdeckel 145 in der Vakuumpumpe eingefasst.

Das Permanentmagnetlager 183 umfasst eine rotorseitige Lagerhälfte 191 und eine statorseitige Lagerhälfte 193, welche jeweils einen Ringstapel aus mehreren in axialer Richtung aufeinander gestapelten permanentmagnetischen Ringen 195, 197 umfassen. Die Ringmagnete 195, 197 liegen einander unter Ausbildung eines radialen Lagerspalts 199 gegenüber, wobei die rotorseitigen Ringmagnete 195 radial außen und die statorseitigen Ringmagnete 197 radial innen angeordnet sind. Das in dem Lagerspalt 199 vorhandene magnetische Feld ruft magnetische Abstoßungskräfte zwischen den Ringmagneten 195, 197 hervor, welche eine radiale Lagerung der Rotorwelle 153 bewirken. Die rotorseitigen Ringmagnete 195 sind von einem Trägerabschnitt 201 der Rotorwelle 153 getragen, welcher die Ringmagnete 195 radial außenseitig umgibt. Die statorseitigen Ringmagnete 197 sind von einem statorseitigen Trägerabschnitt 203 getragen, welcher sich durch die Ringmagnete 197 hindurch erstreckt und an radialen Streben 205 des Gehäuses 119 aufgehängt ist. Parallel zu der Rotationsachse 151 sind die rotorseitigen Ringmagnete 195 durch ein mit dem Trägerabschnitt 201 gekoppeltes Deckelelement 207 festgelegt. Die statorseitigen Ringmagnete 197 sind parallel zu der Rotationsachse 151 in der einen Richtung durch einen mit dem Trägerabschnitt 203 verbundenen Befestigungsring 209 sowie einen mit dem Trägerabschnitt 203 verbundenen Befestigungsring 211 festgelegt. Zwischen dem Befestigungsring 211 und den Ringmagneten 197 kann außerdem eine Tellerfeder 213 vorgesehen sein.

Innerhalb des Magnetlagers ist ein Not- bzw. Fanglager 215 vorgesehen, welches im normalen Betrieb der Vakuumpumpe 111 ohne Berührung leer läuft und erst bei einer übermäßigen radialen Auslenkung des Rotors 149 relativ zu dem Stator in Eingriff gelangt, um einen radialen Anschlag für den Rotor 149 zu bilden, damit eine Kollision der rotorseitigen Strukturen mit den statorseitigen Strukturen verhindert wird. Das Fanglager 215 ist als ungeschmiertes Wälzlager ausgebildet und bildet mit dem Rotor 149 und/oder dem Stator einen radialen Spalt, welcher bewirkt, dass das Fanglager 215 im normalen Pumpbetrieb außer Eingriff ist. Die radiale Auslenkung, bei der das Fanglager 215 in Eingriff gelangt, ist groß genug bemessen, sodass das Fanglager 215 im normalen Betrieb der Vakuumpumpe nicht in Eingriff gelangt, und gleichzeitig klein genug, sodass eine Kollision der rotorseitigen Strukturen mit den statorseitigen Strukturen unter allen Umständen verhindert wird.

Die Vakuumpumpe 111 umfasst den Elektromotor 125 zum drehenden Antreiben des Rotors 149. Der Anker des Elektromotors 125 ist durch den Rotor 149 gebildet, dessen Rotorwelle 153 sich durch den Motorstator 217 hindurch erstreckt. Auf den sich durch den Motorstator 217 hindurch erstreckenden Abschnitt der Rotorwelle 153 kann radial außenseitig oder eingebettet eine Permanentmagnetanordnung angeordnet sein. Zwischen dem Motorstator 217 und dem sich durch den Motorstator 217 hindurch erstreckenden Abschnitt des Rotors 149 ist ein Zwischenraum 219 angeordnet, welcher einen radialen Motorspalt umfasst, über den sich der Motorstator 217 und die Permanentmagnetanordnung zur Übertragung des Antriebsmoments magnetisch beeinflussen können.

Der Motorstator 217 ist in dem Gehäuse innerhalb des für den Elektromotor 125 vorgesehenen Motorraums 137 festgelegt. Über den Sperrgasanschluss 135 kann ein Sperrgas, das auch als Spülgas bezeichnet wird, und bei dem es sich beispielsweise um Luft oder um Stickstoff handeln kann, in den Motorraum 137 gelangen. Über das Sperrgas kann der Elektromotor 125 vor Prozessgas, z.B. vor korrosiv wirkenden Anteilen des Prozessgases, geschützt werden. Der Motorraum 137 kann auch über den Pumpenauslass 117 evakuiert werden, d.h. im Motorraum 137 herrscht zumindest annäherungsweise der von der am Pumpenauslass 117 angeschlossenen Vorvakuumpumpe bewirkte Vakuumdruck.

Zwischen der Rotornabe 161 und einer den Motorraum 137 begrenzenden Wandung 221 kann außerdem eine sog. und an sich bekannte Labyrinthdichtung 223 vorgesehen sein, insbesondere um eine bessere Abdichtung des Motorraums 217 gegenüber den radial außerhalb liegenden Holweck-Pumpstufen zu erreichen.

Eine Turbomolekularpumpe, wie sie beispielsweise vorstehend beschrieben ist, kann mit einem Elektromotor als Drehantrieb ausgestattet werden, wie er in der vorliegenden Offenbarung angegeben und nachstehend anhand eines möglichen Ausführungsbeispiels erläutert ist. Mit anderen Worten kann eine erfindungsgemäße Turbomolekularpumpe - abgesehen von dem erfindungsgemäßen Drehantrieb - derart ausgebildet sein, wie es vorstehend beschrieben ist.

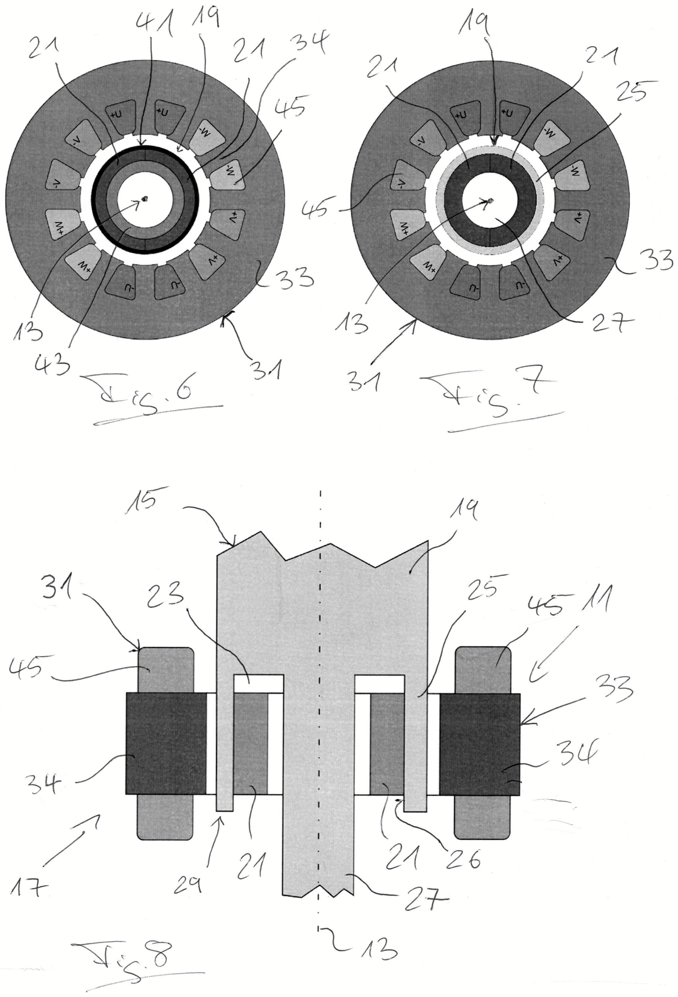

Fig. 6 zeigt in einem Schnitt senkrecht zur Drehachse 13 schematisch einen herkömmlichen Aufbau eines permanenterregten Synchronmotors, wie er für eine Vakuumpumpe und insbesondere für eine Turbomolekularpumpe verwendet werden kann.

Von dem Motorstator 31 sind das Statorblechpaket 33 und die Wicklungen 45 um die einzelnen Statorzähne 34 dargestellt, wobei der Einfachheit halber nur eine der Wicklungen 45 und einer der Statorzähne 34 jeweils mit einem Bezugszeichen versehen ist.

Die während des Betriebs um die Drehachse 13 rotierende Rotorwelle 19 trägt an ihrer Außenseite die Permanentmagnete 21, die von einer als Bandage wirksamen Kohlefaserhülse 41 umgeben sind. Diese sorgt dafür, dass die Permanentmagnete 21 trotz der während des Betriebs wirkenden Zentrifugalkräfte an ihrer radialen Sollposition gehalten werden. Radial innerhalb der Permanentmagnete 21 befindet sich eine Spreizhülse 43, die aus Eisen besteht und als Rückschlussbauteil dient und daher auch als Eisenrückschluss ("back iron") bezeichnet wird.

Bei diesem herkömmlichen Konzept gemäß Fig. 6 sitzen die Permanentmagnete 21 folglich auf der radialen Außenseite der Welle 19 und sind zusätzlich zur Fixierung ihrer radialen Sollposition mit der erwähnten Kohlefaserhülse 41 umgeben.

Bei dem erfindungsgemäßen Konzept gemäß Fig. 7, das zusätzlich in Fig. 8 schematisch in einem die Drehachse 13 enthaltenden Längsschnitt dargestellt ist, befinden sich die Permanentmagnete 21 dagegen innerhalb der Rotorwelle 19.

Hierzu ist in der Welle 19 ein im dargestellten Ausführungsbeispiel ringförmiger Aufnahmeraum 23 ausgebildet, in den die Permanentmagnete 21 eingepresst sind. Die Permanentmagnete 21 bilden gemeinsam einen Ring um die Drehachse 13.

Der ringförmige Aufnahmeraum 23 geht aus von einer Ringfläche 19, die einen die Drehachse 13 enthaltenden, über die Ringfläche 29 hinaus in Fig. 8 nach unten vorstehenden Zentralabschnitt 27 der Welle 19 umgibt. Die Permanentmagnete 21 befinden sich folglich in radialer Richtung zwischen dem erwähnten Zentralabschnitt 27 und einer nach der Ausbildung des ringförmigen Aufnahmeraumes 23 verbleibenden Außenwandung der Welle 19, die einen Hülsenabschnitt 25 bildet.

Die Außenfläche dieses Hülsenabschnitts 25 wird von der Außenfläche der Rotorwelle 19 gebildet, d.h. an den Hülsenabschnitt 25 schließt sich in radialer Richtung nach außen der Luftspalt zwischen Rotorwelle 19 und Motorstator 31 an. Eine Bandage z.B. in Form der Kohlefaserhülse 41 wie bei dem herkömmlichen Aufbau gemäß Fig. 6 ist bei dem erfindungsgemäßen Konzept nicht vorgesehen und auch nicht erforderlich, da die mechanische Stabilität im Hinblick auf die während des Betriebs auf die Permanentmagnete 21 wirkenden Zentrifugalkräfte durch den Hülsenabschnitt 25 der Welle 19 gewährleistet ist.

Der Zentralabschnitt 27 kann - wie hier gezeigt - als Vollzylinderabschnitt ausgebildet sein.

Die Außenseiten der Permanentmagnete 21 befinden sich in flächigem Kontakt mit der Innenfläche 26 des Hülsenabschnitts 25, wodurch eine gute Wärmeübertragung von den Permanentmagneten 21 an das Material der Welle 19 gewährleistet ist.

Wie an anderer Stelle bereits erwähnt, kann es sich bei den Permanentmagneten 21 insbesondere um gesinterte Magnete oder um kunststoffgebundene Magnete handeln. Die Welle 19 besteht vorzugsweise aus Aluminium.

In Fig. 8 sind von dem Motorstator 31 rein schematisch zwei Statorzähne 34 des Statorblechpakets 33 und die entsprechenden Wicklungen 45 dargestellt.

Der Motorstator 31 ist ein Bestandteil des Stators 11 der hier ansonsten nicht näher dargestellten erfindungsgemäßen Turbomolekularpumpe, während die Welle 19 einen Bestandteil des Rotors 15 der Turbomolekularpumpe bildet.

Wie an anderer Stelle erwähnt, kann zusätzlich ein Rückschlussbauteil vorgesehen sein, beispielsweise ein Eisenrückschluss, um die Wicklungsinduktivität zu erhöhen und Magnetmaterial zu sparen. Es hängt von den jeweiligen Gegebenheiten ab, ob die Vorteile oder die Nachteile eines solchen zusätzlichen Rückschlussbauteils überwiegen.

Hinsichtlich möglicher Ausgestaltungen von Turbomolekularpumpen, die einen permanentmagneterregten Synchronmotor als Drehantrieb gemäß den Fig. 7 und 8 aufweisen, wird auch auf den Einleitungsteil und die Fig. 1 bis 5 samt zugehöriger Beschreibung verwiesen.

### Bezugszeichenliste

- 11: Stator
- 13: Drehachse
- 15: Rotor
- 17: Elektromotor
- 19: Welle
- 21: Permanentmagnet
- 23: Aufnahmeraum
- 25: Außenwandung, Hülsenabschnitt
- 26: Innenfläche
- 27: Zentralabschnitt, Vollzylinderabschnitt
- 29: Ringfläche
- 31: Motorstator
- 33: Statorblechpaket
- 34: Statorzahn
- 41: Kohlefaserhülse
- 43: Spreizhülse
- 45: Wicklung

- 111: Turbomolekularpumpe
- 113: Einlassflansch
- 115: Pumpeneinlass
- 117: Pumpenauslass
- 119: Gehäuse
- 121: Unterteil
- 123: Elektronikgehäuse
- 125: Elektromotor
- 127: Zubehöranschluss
- 129: Datenschnittstelle
- 131: Stromversorgungsanschluss
- 133: Fluteinlass
- 135: Sperrgasanschluss
- 137: Motorraum
- 139: Kühlmittelanschluss
- 141: Unterseite
- 143: Schraube
- 145: Lagerdeckel
- 147: Befestigungsbohrung
- 148: Kühlmittelleitung
- 149: Rotor
- 151: Rotationsachse
- 153: Rotorwelle
- 155: Rotorscheibe
- 157: Statorscheibe
- 159: Abstandsring
- 161: Rotornabe
- 163: Holweck-Rotorhülse
- 165: Holweck-Rotorhülse
- 167: Holweck-Statorhülse
- 169: Holweck-Statorhülse
- 171: Holweck-Spalt
- 173: Holweck-Spalt
- 175: Holweck-Spalt
- 179: Verbindungskanal
- 181: Wälzlager
- 183: Permanentmagnetlager
- 185: Spritzmutter
- 187: Scheibe
- 189: Einsatz
- 191: rotorseitige Lagerhälfte
- 193: statorseitige Lagerhälfte
- 195: Ringmagnet
- 197: Ringmagnet
- 199: Lagerspalt
- 201: Trägerabschnitt
- 203: Trägerabschnitt
- 205: radiale Strebe
- 207: Deckelelement
- 209: Stützring
- 211: Befestigungsring
- 213: Tellerfeder
- 215: Not- bzw. Fanglager
- 217: Motorstator
- 219: Zwischenraum
- 221: Wandung
- 223: Labyrinthdichtung

## Patentansprüche

1. Vakuumpumpe, insbesondere Turbomolekularpumpe, mit einem Pumpsystem, das einen Stator (11) und einen im Betrieb relativ zum Stator (11) um eine Drehachse (13) rotierenden Rotor (15) umfasst, und mit einem Elektromotor (17) als Drehantrieb für den Rotor (15), wobei
- der Elektromotor (17) ein permanenterregter Synchronmotor ist,
- der Rotor (15) eine Welle (19) umfasst, und
- die Permanentmagnete (21) des Synchronmotors (17) innerhalb der Welle (19) angeordnet sind.

2. Vakuumpumpe nach Anspruch 1,
wobei in der Welle (19) zumindest ein Aufnahmeraum (23) ausgebildet ist, in dem die Permanentmagnete (21) angeordnet sind.

3. Vakuumpumpe nach Anspruch 2,
wobei der Aufnahmeraum (23) durch Bearbeitung eines Rohteils der Welle (19) entstanden ist, insbesondere durch Trennen, insbesondere durch Spanen.

4. Vakuumpumpe nach Anspruch 2 oder 3,
wobei der Aufnahmeraum (23) zwischen einem radial äußeren, zur Drehachse konzentrischen Hülsenabschnitt (25) der Welle (19) und einem radial inneren, die Drehachse (13) als Mittelachse aufweisenden Zentralabschnitt (27), insbesondere Vollzylinderabschnitt, der Welle (19) gelegen ist.

5. Vakuumpumpe nach den Ansprüchen 2 bis 4,
wobei der Aufnahmeraum (23) ringförmig oder teilringförmig ausgebildet ist und sich auf einem Kreis um die Drehachse (13) herum erstreckt.

6. Vakuumpumpe nach den Ansprüchen 2 bis 5,
wobei der Aufnahmeraum (23) eine Mehrzahl von separaten Einzelräumen umfasst, die auf einem Kreis um die Drehachse (13) liegen.

7. Vakuumpumpe nach den Ansprüchen 2 bis 6,
wobei der Aufnahmeraum (23) von einer Nut gebildet ist, die in einer, insbesondere ebenen, Stirnseite der Welle (19) oder in einer um einen vorstehenden Zentralabschnitt (27), insbesondere Vollzylinderabschnitt, umlaufenden Ringfläche (29) der Welle (19) ausgebildet ist.

8. Vakuumpumpe nach den Ansprüchen 2 bis 7,
wobei die Permanentmagnete (21) in den Aufnahmeraum (23) eingepresst sind.

9. Vakuumpumpe nach den Ansprüchen 2 bis 8,
wobei der Aufnahmeraum (23) verschlossen ist, insbesondere vakuumdicht.

10. Vakuumpumpe nach den Ansprüchen 2 bis 9,
wobei der Aufnahmeraum (23) von einer Außenwandung (25) der Welle umgeben sind.

11. Vakuumpumpe nach einem der vorhergehenden Ansprüche,
wobei die Permanentmagnete (21) in unmittelbarem mechanischen Kontakt mit dem Material der Welle (19) stehen, insbesondere mit der Innenfläche (26) einer den Aufnahmeraum (23) nach radial außen begrenzenden Außenwandung (25).

12. Vakuumpumpe nach einem der vorhergehenden Ansprüche,
wobei die Welle (19) aus einem Material besteht, das Aluminium ist oder das Aluminium umfasst.

13. Vakuumpumpe nach einem der vorhergehenden Ansprüche,
wobei die Permanentmagnete (21) gesinterte Permanentmagnete oder kunststoffgebundene Permanentmagnete sind.

14. Vakuumpumpe nach einem der vorhergehenden Ansprüche,
wobei die Permanentmagnete (21) zusammen einen Permanentmagnet-Ring bilden, der um die Drehachse (13) herum verläuft.

15. Vakuumpumpe nach einem der vorhergehenden Ansprüche,
wobei kein Rückschlussbauteil für die Permanentmagnete (21) vorgesehen ist.
